# EUROPEAN PATENT SPECIFICATION

(11) **EP 0 990 660 B1**
(45) Date of publication and mention of the grant of the patent: **26.04.2006**
(21) Application number: 98924563.4
(22) Date of filing: 10.06.1998
(51) Int. Cl.: C07F 7/21, B01J 31/02, C07B 61/00

(54) **PROCESS FOR PREPARING CYCLIC OLIGOSILOXANES**
VERFAHREN ZUR HERSTELLUNG VON CYCLISCHEN OLIGOSILOXANEN
PROCEDE DE PREPARATION D'OLIGOSILOXANES CYCLIQUES

(30) Priority: 11.06.1997 JP 15316397; 29.07.1997 JP 20288997
(43) Date of publication of application: 05.04.2000
(73) Proprietor: KANEKA CORPORATION, Osaka-shi, Osaka 530-0005 (JP)
(72) Inventor: OUCHI, Katsuya, Hyogo 655-0046 (JP)
(74) Representative: Vossius & Partner
(86) International application number: PCT/JP1998/002562
(87) International publication number: WO 1998/056795

(56) References cited:
- EP-A- 0 739 926
- GB-A- 851 497
- JP-B- 31 002 171
- US-A- 2 816 124
- US-A- 3 484 469
- US-A- 4 689 420
- US-A- 5 346 968

## Description

This invention relates to a method for the production of a cyclic oligosiloxane represented by formula (III): 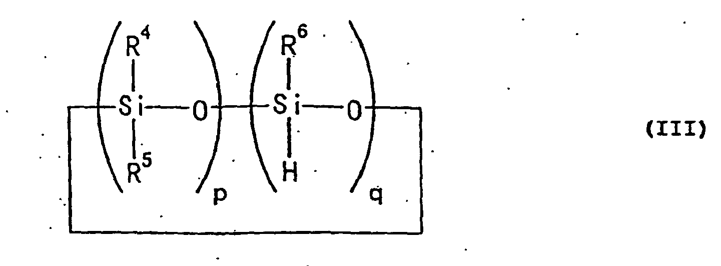 which is used as a material in the field of silicone industry.

This invention further relates to a method for producing a cyclic oligosiloxane represented by formula (Ia):

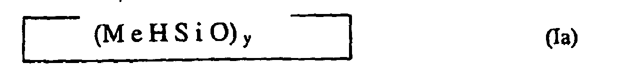

This invention also relates to a method for producing a cyclic oligosiloxane represented by formula (VIII):

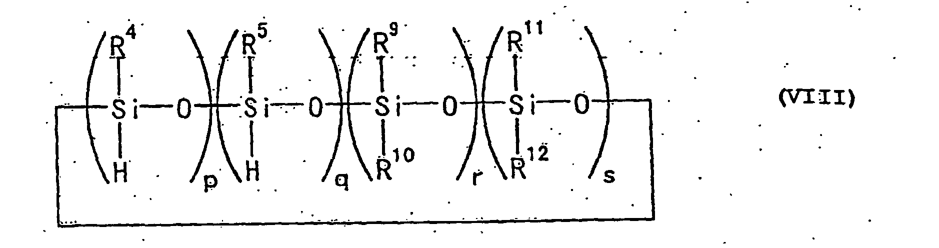

This invention further relates to a method for producing a cyclic oligosiloxane represented by formula (IX):

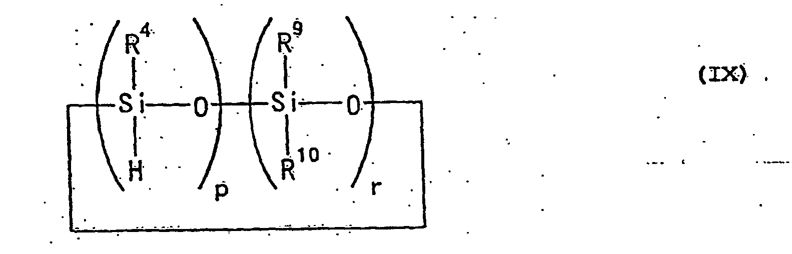

Regarding disproportionation of polysiloxane, a method in which an acidic or alkaline catalyst is used is generally known. However, such an acidic or alkaline catalyst-aided method is not advantageous for industrially stable production because of the severe reaction conditions. Formation of cyclosiloxane by heat decomposition of polysiloxane is known as an example of disproportionation method under neutral conditions, but this method requires an extremely high temperature of about 300°C so that this cannot also be regarded as an advantageous method for industrially stable production. As another disproportionation method under neutral conditions, a method in which a transition metal catalyst is used is known, but since this method requires the use of a catalyst of Pt, Pd or the like expensive metal, this cannot be said as an industrially advantageous method when such a costly point of view is taken into consideration.

Cyclic oligosiloxane compounds are used as materials for the production of high molecular weight polysiloxane compounds in the field of silicone industry. Also, a cyclic oligosiloxane containing Si-H group is used as a material for the production of room temperature crosslinking type silicone rubber which is used for example in sealant in the field of silicone industry. The room temperature crosslinking type silicone rubber is obtained by crosslinking the cyclic oligosiloxane containing Si-H group with a polysiloxane containing vinyl group through their reaction in the presence of a platinum catalyst. The cyclic oligosiloxane containing Si-H group is also used as a material for the production of an organic functional group-linked oligosiloxane which is used for example as an adhesive property increasing agent. The organic functional group-linked oligosiloxane is obtained by allowing the cyclic oligosiloxane containing Si-H group to react with a vinyl group-containing organic group in the presence of a platinum catalyst.

EP-A-0 739 926 relates to a process which comprises reacting a high molecular weight polyorganosiloxane or a composition containing the same with an alkoxysilane and/or a partially hydrolyzed condensate thereof at a temperature of lower than 300 °C in the presence of an alcoholate compound and recovering the resulting organoalkoxysilane and, in addition thereto, at least one of a distillable polyorganosiloxane low molecular weight compound, a non-volatile liquid polyorganosiloxane and a silica. In US-A-2,816,124 a certain process for preparing hexaethylcyclotrisiloxane is described. In US-A-5,326,968 a certain process for the preparation of specific oligosiloxanes is disclosed.

A generally known method for the production of cyclic oligosiloxane is a method of hydrolysis condensing organosilanes having two hydrolyzable groups on its silicon atoms such as dimethyldichlorosilane or the like compound. However, this method is not advantageous for its industrially stable production, because the reaction system becomes severely acidic under such hydrolysis condensation conditions.

Particularly, in the case of the production of the cyclic oligosiloxane containing Si-H group, the Si-H group has considerably high reactivity under such acidic conditions and therefore reacts with water or silanol group coexisting in the reaction system, so that yield of the compound of interest becomes low. Accordingly, the following methods (a) and (b) have been proposed for dissolving this problem.

Namely, (a) a method in which methyldichlorosilane is hydrolyzed in the presence of a mixed solvent of tetrahydrofuran with a hydrocarbon solvent (JP-A-6-80680; the term "JP-A" as used herein means an "unexamined published Japanese patent application") and (b) a method in which dichlorodisiloxane is hydrolyzed in the presence of t-butyl alcohol (JP-A-7-285974).

However, it is necessary to use benzene as the hydrocarbon solvent in the aforementioned method (a) in order to obtain a cyclic oligosiloxane as the product with a high yield, but industrial realization of this method may cause a problem in terms of the safety of benzene. Also, dichlorodisiloxane to be used as a material in the aforementioned method (b) is not a material commercialized as a generalized product, so that availability of this material generally becomes a problem when this method is carried out, as well as a problem of lacking in the flexibility of industrial techniques.

In addition, chlorosilane is hydrolyzed in each of the methods (a) and (b), but it is known that hydrogen chloride is formed as a by-product by this reaction and the product is contaminated by a small amount of hydrogen chloride. However, when such a product containing hydrogen chloride is used for example in electronic materials, the final product containing ion components such as chloride ion is not desirable from the viewpoint, for example, of the corrosion of electrodes. Thus, the products manufactured by such methods are not suited for their application to electronic materials and the like, and their industrial availability is reduced. Also, the reaction is carried out under strongly acidic conditions in each of the methods (a) and (b), so that not only the steps become complex, such as adjustment of pH in the after step, but also it causes a problem in that caution is required in handling the material.

As other methods for the production of cyclic oligosiloxane, certain methods have been proposed in which a linear polysiloxane or a high polymerization degree cyclic polysiloxane is subjected to its reaction under various conditions in the presence of an acidic or alkaline catalyst.

Examples of the method which uses an acidic catalyst include (c) a method in which polysiloxane containing Si-H group is subjected to the reaction in the presence of water and activated clay (JP-B-54-13480; the term "JP-B" as used herein means an "examined Japanese patent publication"), (d) a method in which methylhydrogenpolysiloxane is subjected to the reaction by heating it in the presence of an acid catalyst (JP-B-55-11697), (e) a method in which organopolysiloxane is subjected to the reaction by allowing it to contact with a heated fixed catalyst bed under a reduced pressure (JP-A-2-129192), (f) a method in which the reaction of methylhydrogenpolysiloxane is carried out in the presence of a high boiling point organodisiloxane (JP-A-7-242678) and (g) a method in which organohydrogenpolysiloxane is subjected to the reaction in the presence of aluminum chloride (JP-A-7-316167).

However, the aforementioned method (c) has an industrially serious problem of causing gelation of the reaction system due to high reactivity of the Si-H group with water under acidic conditions. The aforementioned methods (d) and (e) require a considerably high temperature of from 250 to 500°C for the reaction, thus causing a problem when used in an industrial scale. In the aforementioned method (f), it is necessary to use a high boiling point disiloxane as a side material in addition to the main material. However, such a special disiloxane is not a material commercialized as a generalized product, so that this method lacks in the flexibility of industrial techniques in terms of the availability of the material when this method is carried out. It also is not industrially advantageous from the viewpoint of cost.

In addition, each of the aforementioned methods (c) to (g) uses an acid catalyst. Particularly, the aforementioned method (g) uses aluminum chloride as the catalyst having considerably strong acidity. Also, since Si-H group is basically unstable against water and the like under acidic conditions, it is not desirable to use an acid catalyst in the Si-H group-containing system of these methods; for example, when the reaction system is contaminated by even a small amount of water for example from the material or air, the Si-H group reacts with water to decrease the yield of the cyclic oligosiloxane as the product and also to cause gelation of the reaction system. In consequence, the aforementioned methods (c) to (g) which use acid catalysts are techniques that have practical problems from the viewpoint of stable industrial production.

Examples of the method in which an alkaline catalyst is used include (h) a method in which carbonate of an alkali metal is used as the catalyst (JP-B-45-15036) and (i) a method in which an alkali metal silanolate is used as the catalyst (JP-B-33-2149)

However, since these methods use alkaline catalysts, not only the steps become complex, such as adjustment of pH in the after step, but also caution is required in handling the materials, similar to the case of acid catalysts, so that they have a problem in terms of stable industrial production. In addition, since the Si-H group in the Si-H group-containing system is considerably unstable under alkaline conditions, these methods cannot substantially be used. Thus, the aforementioned methods (h) and (i) which use alkaline catalysts are techniques that have practical problems from the viewpoint of stable industrial production and also lack in flexibility.

In consequence, in order to resolve the aforementioned problems, the present invention aims at providing a method for the production of cyclic oligosiloxane, which is practical in carrying out industrial production because a material available with low cost is used, the reaction can be carried out under moderate conditions, namely neutral conditions and relatively low temperature, and, particularly, gelation of the reaction system does not occur in the case of a system which contains Si-H group.

As a result of the extensive investigation to resolve the above-mentioned problems, the inventors of the present invention have found that a cyclic oligosiloxane can be practically produced by carrying out the reaction in the presence of a metal alkoxide, thereby resulting in the accomplishment of this invention.

Accordingly, the present invention includes a method for producing a cyclic oligosiloxane represented by the formula (Ia), which comprises heating a polysiloxane represented by the formula (Ib) in the presence of a metal alkoxide under neutral conditions :

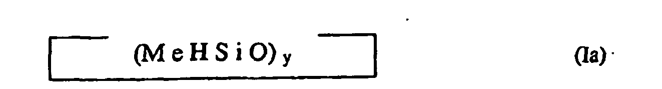

Me₃SiO-(MeHSiO)ₓ-SiMe₃ (Ib)

wherein x is a number of from 20 to 1000, and y is a number of 3 to 10. (claim 1);
a method for producing a cyclic oligosiloxane represented by formula (III): 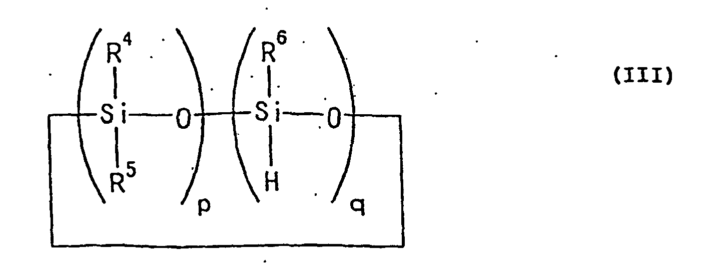 (wherein R⁴ to R⁶ may be the same or different from one another and each represents a monovalent substituted or unsubstituted hydrocarbon radical, p is 0 or a number of from 1 to 9, q is a number from 1 to 10, and p and q are also numbers that satisfy 3 ≤ p + q ≤ 10) , which comprises heating a linear polysiloxane represented by formula (I): 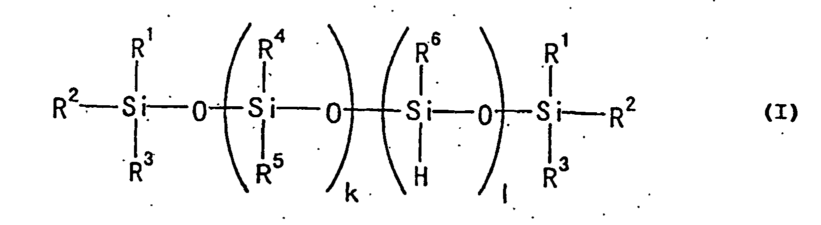 (wherein R¹ represents a monovalent substituted or unsubstituted hydrocarbon radical, R² represents a hydroxyl group or a monovalent substituted or unsubstituted hydrocarbon radical, R³ represents a hydrogen atom or a monovalent substituted or unsubstituted hydrocarbon radical, R⁴ to R⁶ may be the same or different from one another and each represents a monovalent substituted or unsubstituted hydrocarbon radical, k is 0 or a number of from 1 to 999, l is a number from 1 to 1000 and k and l are also numbers that satisfy 4 ≤ k + l ≤ 1,000) and/or a cyclic polysiloxane represented by formula (II) : 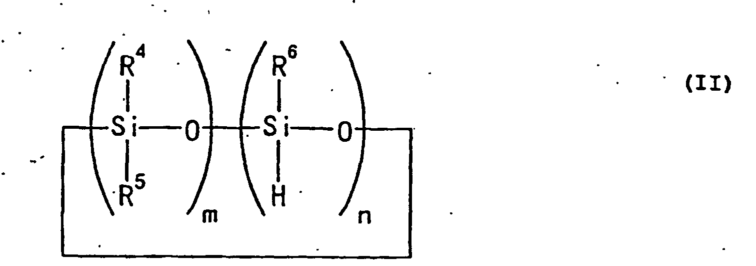 (wherein R⁴ to R⁶ may be the same or different from one another and each represents a monovalent substituted or unsubstituted hydrocarbon radical, m is 0 or a number of from 1 to 999, n is a number from 1 to 1000 and m and n are also numbers that satisfy 3 ≤ m + n ≤ 1,000) in the presence of a metal alkoxide wherein said metal alkoxide is an aluminum alkoxide, a titanium alkoxide, a zirconium alkoxide, a tin alkoxide or a zinc alkoxide.(claim 2) ;
the method for producing a cyclic oligosiloxane according to claim 2 , wherein each of R¹, R⁴ and R⁶ is a methyl group, R² is a hydroxyl group or a methyl group and R³ is a hydrogen atom or a methyl group (claim 3) ;
the method for producing a cyclic oligosiloxane according to any one of claims 2 or 3, wherein k, l, m, n, p and q are k < l, m < n and p < q (claim 4) ;
the method for producing a cyclic oligosiloxane according to claim 2 or 3; wherein k = m = p = 0 (claim 5),
a method for producing a cyclic oligosiloxane represented by formula (VIII): 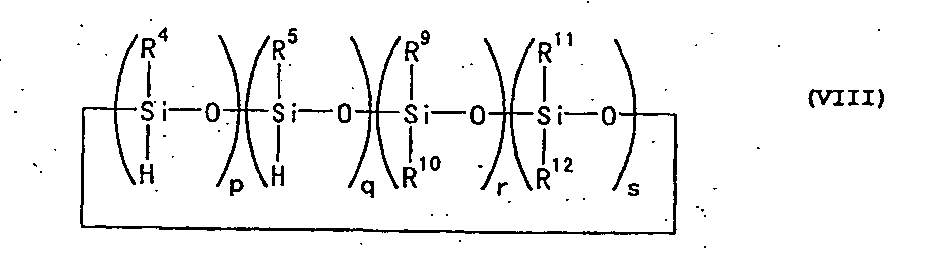 (wherein R⁴, R⁵, R⁹, R¹⁰, R¹¹ and R¹² may be the same or different from one another and each represents a monovalent substituted or unsubstituted hydrocarbon radical, each of p, q, r and s is a number of from 0 to 9, and p, q, r and s are also numbers that satisfy 3 ≤ p + q + r + s ≤ 10, l ≤ p + q and l ≤ r + s), which comprises heating
(1) a polysiloxane component consisting of a linear polysiloxane represented by formula (IV): 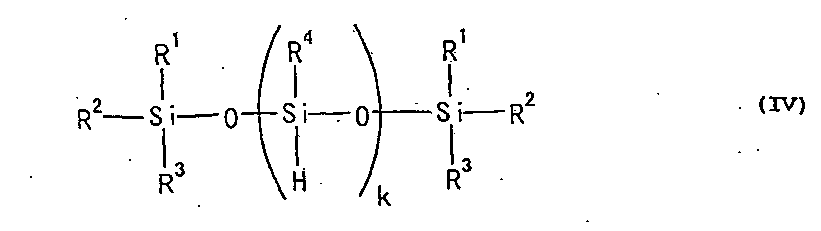 (wherein R¹ represents a monovalent substituted or unsubstituted hydrocarbon radical, R² represents a hydroxyl group or a monovalent substituted or unsubstituted hydrocarbon radical, R³ represents a hydrogen atom or a monovalent substituted or unsubstituted hydrocarbon radical, R⁴ represents a monovalent substituted or unsubstituted hydrocarbon radical, and k is a number of from 4 to 1,000) and/or a cyclic polysiloxane represented by formula (V): 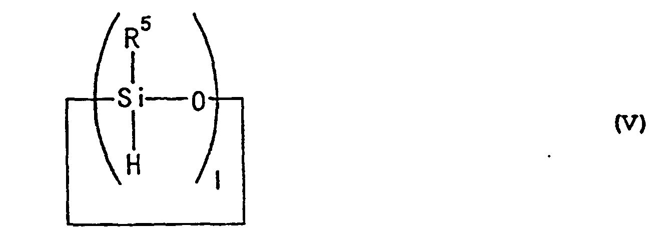 (wherein R⁵ represents the same or a different-monovalent substituted or unsubstituted hydrocarbon radical, and l is a number of from 4 to 1,000) and
(2) a polysiloxane component consisting of a linear polysiloxane represented by formula (VI): 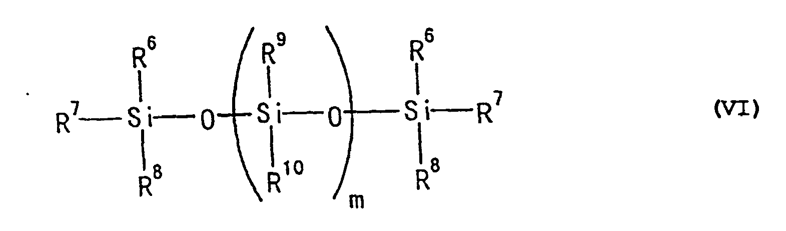 (wherein R⁶ represents a hydroxyl group or a monovalent substituted or unsubstituted hydrocarbon radical, R⁷ to R¹⁰ may be the same or different from one another and each represents a monovalent substituted or unsubstituted hydrocarbon radical, and m is a number of from 4 to 1,000) and/or a cyclic polysiloxane represented by formula (VII) : 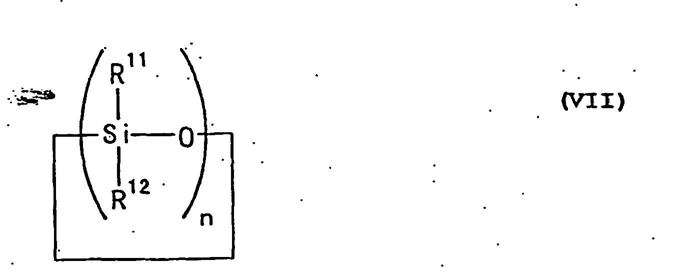 (wherein R¹¹ and R¹² may be the same or different from each other and each represent a monovalent substituted or unsubstituted hydrocarbon radical, and n is a number of from 4 to 1,000), in the presence of a metal alkoxide wherein said metal alkoxide is an aluminum alkoxide, a titanium alkoxide, a zirconium alkoxide, a tin alkoxide or a zinc alkoxide. (claim 6) ;
   a method for producing a cyclic oligosiloxane represented by formula (IX) : 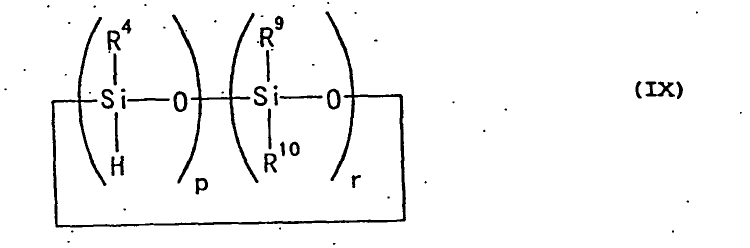 (wherein R⁴, R⁹ and R¹⁰ may be the same or different from one another and each represents a monovalent substituted or unsubstituted hydrocarbon radical, each of p and r is a number of from 1 to 9, and p and r are also numbers that satisfy 3 ≤ p + r ≤ 10), which comprises heating a linear polysiloxane represented by formula (IV): 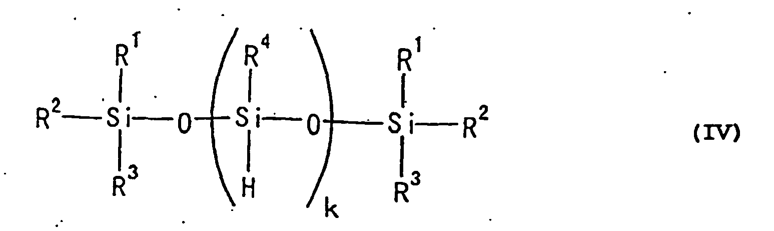 (wherein R¹ represents a monovalent substituted or unsubstituted hydrocarbon radical, R² represents a hydroxyl group or a monovalent substituted or unsubstituted hydrocarbon radical, R³ represents a hydrogen atom or a monovalent substituted or unsubstituted hydrocarbon radical, R⁴ represents a monovalent substituted or unsubstituted hydrocarbon radical, and k is a number of from 4 to 1,000) and a linear polysiloxane represented by formula (VI): 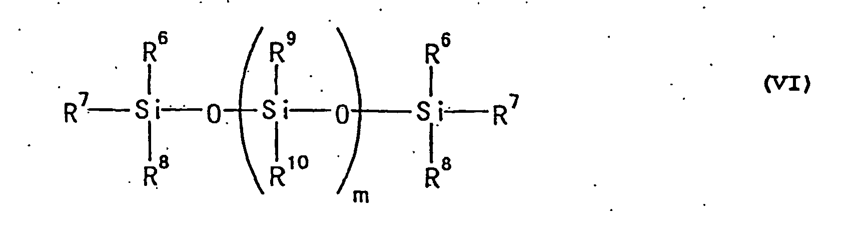 (wherein R⁶ represents a hydroxyl group or a monovalent substituted or unsubstituted hydrocarbon radical, R⁷ to R¹⁰ may be the same or different from one another and each represents a monovalent substituted or unsubstituted hydrocarbon radical, and m is a number of from 4 to 1,000), in the presence of a metal alkoxide wherein said metal alkoxide is an aluminum alkoxide, a titanium alkoxide, a zirconium alkoxide, a tin alkoxide or a zinc alkoxide. (claim 7);
   the method for producing a cyclic oligosiloxane according to claim 6 or 7, wherein each of R¹, R⁴, R⁵, R⁷, R⁸, R⁹, R¹⁰, R¹¹ and R¹² is a methyl group, each of R² and R⁶ is a hydroxyl group or a methyl group and R³ is a hydrogen atom or a methyl group (claim 8);
   the method for producing a cyclic oligosiloxane according to any one of claims 1 to 7, wherein the metal alkoxide is an aluminum alkoxide, (claim 9); and
   the method for producing a cyclic oligosiloxane according to any one of claims 1 to 9, wherein the formed cyclic oligosiloxane is distilled under a reduced pressure (claim 10).

The following describes the present invention in detail.

Each of R¹ of the linear polysiloxane represented by the aforementioned formula (I), R¹ of the linear polysiloxane represented by the aforementioned formula (IV) and R⁷ and R⁸ of the linear polysiloxane represented by the aforementioned formula (VI) is a monovalent substituted or unsubstituted hydrocarbon radical, and examples of the hydrocarbon radical include a halogenated alkyl group, an alkyl group, a cycloalkyl group, an alkenyl group, a cycloalkenyl group and an aryl group. Among these groups, methyl group, ethyl group, propyl group, isopropyl group, n-butyl group, s-butyl group, t-butyl group, cyclohexyl group, vinyl group and phenyl group are preferred, and methyl group and phenyl group are more preferred. Most preferred is methyl group.

Each of R² of the linear polysiloxane represented by the aforementioned formula (I), R² of the linear polysiloxane represented by the aforementioned formula (IV) and R⁶ of the linear polysiloxane represented by the aforementioned formula (VI) is a hydroxyl group or a monovalent substituted or unsubstituted hydrocarbon radical, and examples of the monovalent substituted or unsubstituted hydrocarbon radical are the same as those of the aforementioned R¹.

Each of R³ of the linear polysiloxane represented by the aforementioned formula (I) and R³ of the linear polysiloxane represented by the aforementioned formula (IV) is a hydrogen atom or a monovalent substituted or unsubstituted hydrocarbon radical, and examples of the monovalent substituted or unsubstituted hydrocarbon radical are the same as those of the aforementioned R¹.

Each of R⁴ and R⁶ of the linear polysiloxane represented by the aforementioned formula (I), R⁴ and R⁶ of the cyclic polysiloxane represented by the aforementioned formula (II), R⁴ and R⁶ of the cyclic oligosiloxane represented by the aforementioned formula (III), R⁴ of the linear oligosiloxane represented by the aforementioned formula (IV) , R⁵ of the cyclic polysiloxane represented by the aforementioned formula (V), R⁹ of the linear polysiloxane represented by the aforementioned formula (VI), R¹¹ of the cyclic polysiloxane represented by the aforementioned formula (VII), R⁴, R⁵, R⁹ and R¹¹ of the cyclic oligosiloxane represented by the aforementioned formula (VIII) and R⁴ and R⁹ of the cyclic oligosiloxane represented by the aforementioned formula (IX) is a monovalent substituted or unsubstituted hydrocarbon radical, and its examples are the same as those of the aforementioned R¹. In addition, and R⁶ of the aforementioned formulae (I), (II) and (III) and R⁴, R⁵, R⁹ and R¹¹ of the aforementioned formulae (IV), (V), (VI), (VII), (VIII) and (IX) may be the same or different from one another as respective repeating units.

Each of R⁵ of the linear polysiloxane represented by the aforementioned formula (I), R⁵ of the cyclic polysiloxane represented by the aforementioned formula (II), R⁵ of the cyclic oligosiloxane represented by the aforementioned formula (III), R¹⁰ of the linear polysiloxane represented by the aforementioned formula (VI), R¹² of the cyclic polysiloxane represented by the aforementioned formula (VII), R¹⁰ and R¹² of the cyclic oligosiloxane represented by the aforementioned formula (VIII) and R¹⁰ of the cyclic oligosiloxane represented by the aforementioned formula (IX) is a monovalent substituted or unsubstituted hydrocarbon radical, and examples of the hydrocarbon radical include an alkyl group, a cycloalkyl group, an alkenyl group, a cycloalkenyl group and an aryl group. Preferred among these groups include methyl group, ethyl group, a substituted alkyl group represented by CH₂CH₂X¹ (wherein X¹ represents a monovalent organic group such as a halogen atom, cyano group, phenyl group, an alkoxy group, an alkylcarbonyl group or an alkoxycarbonyl group), a substituted alkyl group represented by CH₂CH(CH₃)X² (wherein X² represents a monovalent organic group such as a halogen atom, phenyl group, an alkylcarbonyl group or an alkoxycarbonyl group), a substituted alkyl group represented by CH₂CH₂CH₂X³ (wherein X³ represents a monovalent organic group such as a halogen atom, hydroxyl group or a substituted or unsubstituted alkoxy group), vinyl group and phenyl group. In addition, R⁵ of the aforementioned formulae (I), (II) and (III) and R¹⁰ and R¹² of the aforementioned formulae (VI), (VII), (VIII) and (IX) may be the same or different from one another as respective repeating units.

Illustrative examples of the linear polysiloxane represented by the aforementioned formula (I) include
Me₃SiO- (Me₃SiO)ₓ SiMe₃,
Me₃SiO-(Ph₂SiO)ₓSiMe₃,
Me₃SiO-(MePhSiO)ₓSiMe₃,
Me₂PhSiO-(Me₂SiO)ₓ-SiMe₂Ph,
MePh₂SiO-(Me₂SiO)ₓ-SiMePh₂,
Me₂Si (OH)O- (Me₂SiO)ₓ-SiMe₂ (OH),
Me₃SiO- (MeHSiO)ₓ-SiMe₃,
Me₂PhSiO- (MeHSiO)ₓ-SiMe₂Ph,
MeHSi (OH) O- (MeHSiO)ₓ-SiMe(OH) H,
(wherein x is a number of from 4 to 1,000, preferably from 20 to 500, more preferably from 35 to 200, Me means methyl group and Ph means phenyl group)
Me₃SiO- (MeSi (CH₂CH₂C₆H₄CH₃) O)₅-(MeHSiO)₅-SiMe₃,
MeHSi(OH)O- (MeSi (CH₂CH₂C₆H₄CH₃) O)₅-(MeHSiO) ₅-SiMe (OH)H,
Me₃SiO- (Me₂SiO) ₓ-(MeHSiO) _{y}-SiMe₃,
Me₃SiO- (MePhSiO)ₓ- (MeHSiO)_{y}-SiMe₃,
Me₃SiO- (MeSi(CH₂CH(CH₃)C₆H₅)O)ₓ-(MeHSiO)_{y}-SiMe₃, and
Me₃SiO-(MeSi (CH₂CH₂CH₂(OCH₂CH₂)ₙOMe)O)ₓ-(MeHSiO)_{y}-SiMe₃
(wherein each of x and y is a number of from 4 to 1,000, preferably x + y is from 20 to 500, more preferably x + y is from 35 to 200, and n is 0 or a number of from 1 to 100, preferably from 1 to 20, more preferably from 5 to 10).

Examples of the cyclic polysiloxane represented by the aforementioned formula (II) include 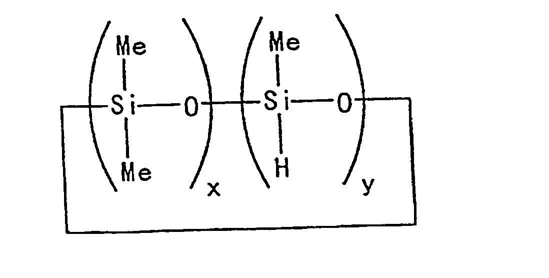 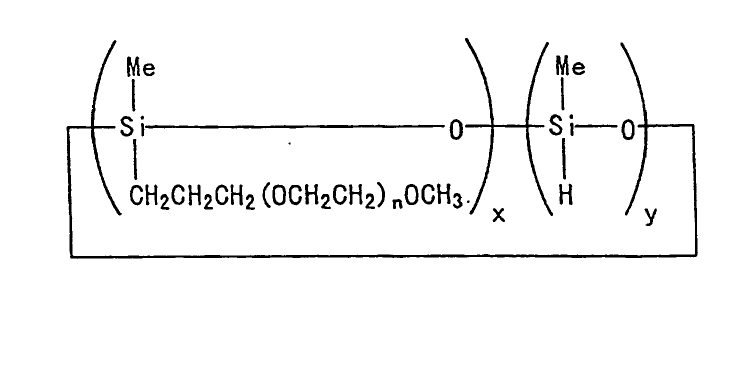 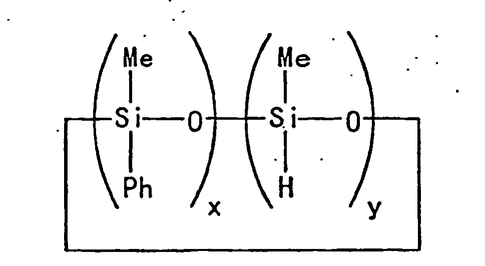 (wherein is 0 or a number of from 1 to 999, y is a number of from 1 to 1000, preferably x + y is from 4 to 100, more preferably x + y is from 4 to 10, and n is 0 or a number of from 1 to 100, preferably from 1 to 20, more preferably from 5 to 10)

Examples of the cyclic oligosiloxane represented by the aforementioned formula (III) include 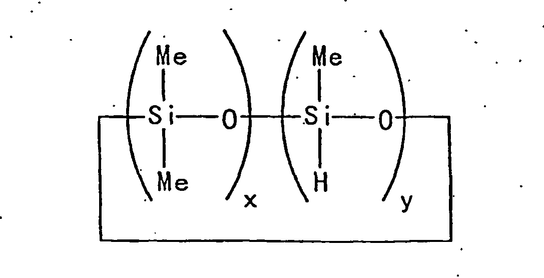 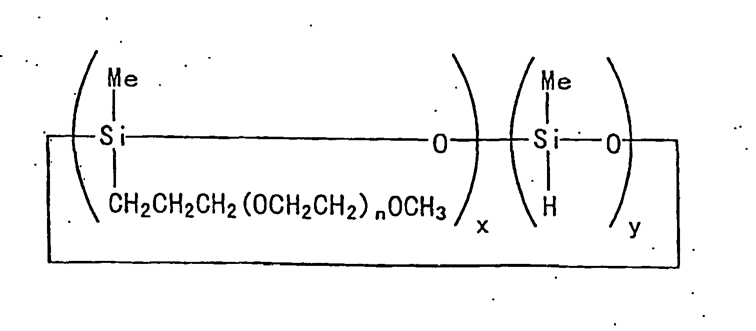 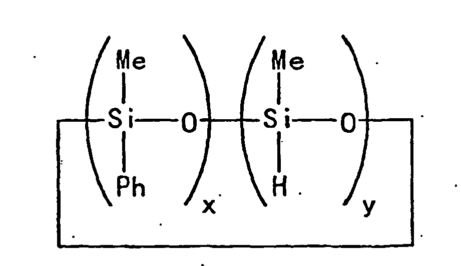 (wherein x is 0 or a number of from 1 to 9, y is a number of from 1 to 10, and x + y is a number of from 3 to 10, preferably bach x is 0 or a number of from 1 to 6, y is a number of from 1 to 6 and x + y is a number of from 3 to 6, more preferably x is 0 or a number of from 1 to 4, y is a number of from 1 to 4, and x + y is 4, and n is 0 or a number of from. 1 to 100, preferably from 1 to 20, more preferably from 5 to 10).

Illustrative examples of the linear polysiloxane represented by the aforementioned formula (IV) include
Me₃SiO- (MeHSiO)ₓ-SiMe₃,
Me₂PhSiO- (MeHSiO)ₓ-SiMe₂Ph,
MeHSi (OH) O- (MeHSiO)ₓ-SiMe (OH) H,
Me₃SiO- (PhHSiO)ₓ-SiMe₃,
Me₂PhSiO- (PhHSiO)ₓ-SiMe₂Ph and
MeHSi (OH) O- (PhHSiO)ₓ-SiMe (OH) H
(wherein x is a number of from 4 to 1,000, preferably from 20 to 500, more preferably from 35 to 200).

Examples of the cyclic polysiloxane represented by the aforementioned formula (V) include 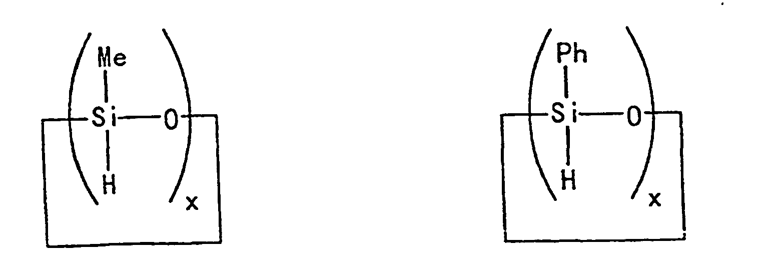 (wherein x is a number of from 4 to 1,000, preferably from 4 to 100, more preferably from 4 to 10).

Examples of the linear polysiloxane represented by the aforementioned formula (VI) include
Me₃SiO- (Me₂SiO)ₓ-SiMe₃,
Me₃SiO- (Ph₂SiO)ₓ-SiMe₃,
Me₃SiO- (MePhSiO)ₓ-SiMe₃,
Me₂PhSiO- (Me₂SiO)ₓ-SiMe₂Ph,
MePh₂SiO- (Me₂SiO)ₓ-SiMePh₂,
Me₂Si (OH) O-(Me₂SiO)ₓ-SiMe₂(OH) and
Me₃SiO- (MeSi (CH₂CH₂CH₂ (OCH₂CH₂)ₙOMe)O)ₓ-SiMe₃
(wherein x is a number of from 4 to 1,000, preferably from 20 to 500, more preferably from 35 to 200, and n is 0 or a number of from 1 to 100, preferably from 1 to 20, more preferably from 5 to 10).

Illustrative examples of the cyclic polysiloxane represented by the aforementioned formula (VII) include 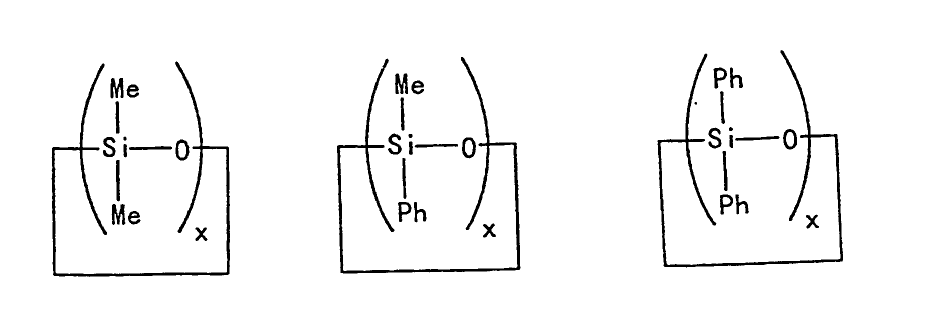 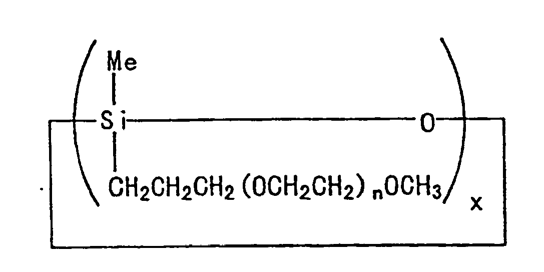 (wherein x is a number of from 4 to 1,000, preferably from 4 to 100, more preferably from 4 to 10, and n is 0 or a number of from 1 to 100, preferably from 1 to 20, more preferably from 5 to 10) .

Examples of the cyclic oligosiloxane represented by the aforementioned formulae (VIII) and (IX) include 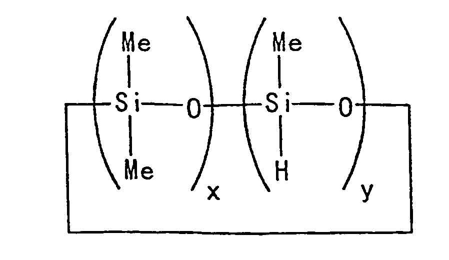 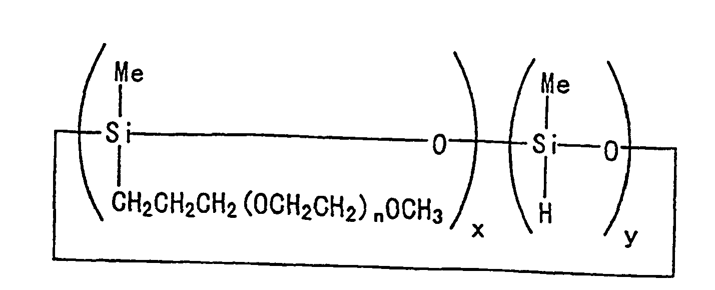 (wherein each of x and y is a number of from 1 to 9 and x + y is a number of from 3 to 10, preferably each of x and y is a number of from 1 to 5 and x + y is a number of from 3 to 6, more preferably each of x and y is a number of from 1 to 3 and x + y is 4, and n is 0 or a number of from 1 to 100, preferably from 1 to 20, more preferably from 5 to 10).

The metal alkoxide to be used in the present invention can be represented for example by the following formula (X): 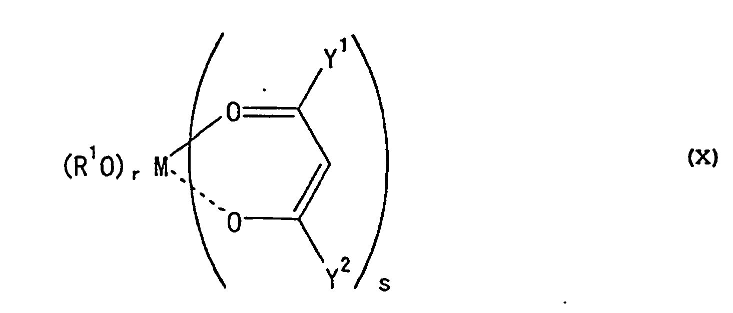 (wherein R¹ is a monovalent substituted or unsubstituted hydrocarbon radical and examples of the hydrocarbon radical are the same as those of R¹ of the aforementioned formula (I), each of Y¹ and Y² is an alkyl group having 1 to 8 carbon atoms, an aryl group or an alkoxy group, M is a divalent to tetravalent metal element, each of r and s is 0, 1, 2, 3 or 4, and r + s is from 2 to 4). Among these compounds, a metal alkoxide in which M is Al, Ti, Zr, Sn or Zn is used preferably, a metal alkoxide in which M is Al, Ti or Zr, is used more preferably, and an aluminum alkoxide is used most preferably.

Illustrative examples of the metal alkoxide include aluminum triethoxide, aluminum triisopropoxide, aluminum tributoxide, aluminum tri-sec-butoxide, aluminum diisopropoxy-sec-butoxide, aluminum diisopropoxyacetylacetonate, aluminum di-sec-butoxyacetylacetonate, aluminum diisopropoxyethylacetoacetate, aluminum di-sec-butoxyethylacetoacetate, aluminum trisacetylacetonate, aluminum trisethylacetoacetate, aluminum acetylacetonate bisethylacetoacetate, titanium tetraethoxide, titanium tetraisopropoxide, titanium tetrabutoxide, titanium diisopropoxybisacetylacetonate, titanium diisopropoxybisethylacetoacetate, titanium tetra-2-ethylhexyloxide, titanium diisopropoxybis (2-ethyl-1,3-hexanediolate), titanium dibutoxybis(triethanolaminate), zirconium tetrabutoxide, zirconium tetraisopropoxide, zirconium tetramethoxide, zirconium tributoxide monoacetylacetonate, zirconium dibutoxide bisacetylacetonate, zirconium butoxide trisacetylacetonate, zirconium tetraacetylacetonate, zirconium tributoxide monoethylacetoacetate, zirconium dibutoxide bisethylacetoacetate, zirconium butoxide trisethylacetoacetate and zirconium tetraethylacetoacetate. In addition to these compounds, cyclic 1,3,5-triisopropoxycyclotrialuminoxane and the like can also be used. Among these compounds, aluminum triisopropoxide, aluminum tri-sec-butoxide, aluminum diisopropoxyethylacetoacetate, aluminum di-sec-butoxyethylacetoacetate, aluminum trisacetylacetonate, titanium tetraisopropoxide, titanium tetrabutoxide and zirconium tetrabutoxide are used preferably. Most preferred is aluminum triisopropoxide.

These metal alkoxides may be used either alone or in any combination.

Amount of the metal alkoxide to be used in the present invention can be selected broadly depending on the reaction rate, but it is generally from 0.01 to 10 parts by weight, preferably from 0.01 to 5 parts by weight, more preferably from 0.01 to 1 part by weight, based on the material polysiloxane.

The reaction temperature in the present invention may be any temperature at which the reaction progresses and is generally from 60 to 300°C, but a temperature of from 100 to 200°C is desirable for the purpose of inhibiting side reactions and accelerating the reaction efficiently.

The reaction of the present invention can be carried out under ordinary pressure or under a reduced pressure, but it is desirable to carry out the reaction under a reduced pressure in order to efficiently promote the reaction at a relatively low temperature by successively distilling the product. In that case, the reaction can be carried out under a reduced pressure of from 10 to 300 mmHg.

As occasion demands, an appropriate solvent can be used in the reaction of the present invention. A solvent which does not have chemical reactivity with the metal alkoxide but has a boiling point of higher than that of the formed cyclic oligosiloxane can be used. Illustrative examples of the solvent include decane, dodecane, mineral oil, mesitylene, diethylene glycol diethyl ether and diethylene glycol dibutyl ether. It can be used in an optional amount.

This reaction can be carried out in the presence of a small amount of an alkoxysilane as an additive agent other than the solvent, but yield of the cyclosiloxane of interest is reduced as the amount of the added alkoxysilane is increased, so that its practical value becomes low.

The reaction of the present invention can be carried out by mixing and heating the material polysiloxane and a metal alkoxide and then purifying the product by distillation or the like means or by successively distilling the product while the reaction is carried out. In order to prevent side reactions, it is desirable to carry out the reaction by successively distilling the product.

When the product is distilled, a rectifying column such as a packed column can be used as occasion demands. When a rectifying column is used, purity of the product can be increased.

According to the reaction of the present invention, a low molecular weight cyclic oligosiloxane can be obtained from a high molecular weight linear or cyclic polysiloxane, but reverse conversion of a low molecular weight compound into a high molecular weight compound can also be carried out. In consequence, in the invention of claims 1, 2, 6 and 7 of this application, the number of constituting silicon atoms of the obtained cyclic oligosiloxane is generally decreased when compared with that of the starting material polysiloxane, but a case in which the number of constituting silicon atoms is increased and a case in which the number of constituting silicon atoms does not change before and after the reaction, such as changes from linear form to cyclic form and changes in substituent groups, are also included in the present invention.

Examples of the present invention are given below by way of illustration and not by way of limitation.

### Inventive Example 1

A 300 ml capacity three neck round bottom flask equipped with a thermometer, a magnetic stirrer tip, an distillation tube with a rectifying column (Vigreaux type, 15 cm) and a distillation collector was connected to a decompression pump through a trap. The flask was charged with 150 g of a polymethylhydrogensiloxane which is terminated with trimethylsilyl groups represented by Me₃SiO-(MeHSiO)₄₀-SiMe₃ and 1.5 g of aluminuin-triisopropoxide, and heated for 30 minutes in an oil bath of 150°C under ordinary pressure. Next, while heating the flask at 150 to 160°C in the oil bath and keeping the system under a reduced pressure of 100 mmHg, the fraction distilled at an distillation temperature of 65 to 70°C was recovered over 2 hours, thereby obtaining 113 g of the fraction. The resulting residue was a cloudy liquid. When analyzed by a gas chromatography, the thus obtained fraction showed a composition of 1.8% by weight of 1,3,5-trimethylcyclotrisiloxane, 59.1% by weight of 1,3,5,7-tetramethylcyclotetrasiloxane, 31.5% by weight of 1,3,5,7,9-pentamethylcyclopentasiloxane, 5.7% by weight of 1,3,5,7,9,11-hexamethylcyclohexasiloxane and 1.9% by weight of other high boiling point components.

### Inventive Example 2

A 1 liter capacity three neck round bottom flask equipped with a thermometer, a magnetic stirrer tip, a distillation tube with a rectifying column (McMahon packing, 30 cm) and a fraction collector was connected to a decompression pump through a trap. The flask was charged with 750 g of a polymethylhydrogensiloxane, which is terminated with trimethylsilyl groups, represented by Me₃SiO-(MeHSiO)₄₀-SiMe₃ and 0.75 g of aluminum triisopropoxide, and heated for 30 minutes in an oil bath of 180°C under ordinary pressure. Next, while heating the flask at 180 to 190°C in the oil bath and keeping the system under a reduced pressure of 100 mmHg, the fraction distilled at an distillation temperature of 69 to 78°C was recovered over 9 hours, thereby obtaining 690 g of the fraction. The resulting residue was a liquid. When analyzed by a gas chromatography, the thus obtained fraction showed a composition of 4.3% by weight of 1,3,5-trimethylcyclotrisiloxane, 82.3% by weight of 1,3,5,7-tetramethylcyclotetrasiloxane and 13.4% by weight of other high boiling point components.

### Inventive Example 3

A 300 ml capacity three neck round bottom flask equipped with a thermometer, a magnetic stirrer tip, a distillation tube with a rectifying column (Vigreaux type, 15 cm) and a fraction collector was connected to a decompression pump through a trap. The flask was charged with 150 g of a polymethylhydrogensiloxane which is terminated with trimethylsilyl groups having a viscosity of 100 cp, 150 g of a polydimethylsiloxane which is terminated with trimethylsilyl groups having a viscosity of 100 cp and 1.5 g of aluminum triisopropoxide and subjected to 30 minutes of preliminary heating in an oil bath of 150°C under ordinary pressure. Next, while heating the flask at 150 to 160°C in the oil bath and keeping the system under a reduced pressure of 50 mmHg, the fraction distilled during the reaction was recovered over 2 hours, thereby obtaining 220 g of the fraction. The resulting residue was a cloudy liquid. Results of gas chromatography and NMR analyses showed that the thus obtained fraction was a cyclosiloxane mixture having 46% of MeHSiO unit and 54% of Me₂SiO unit in average molar fraction and having mostly 3 to 6 siloxy units per 1 molecule.

### Inventive Example 4

A 30 ml capacity flask equipped with a magnetic stirrer tip and a reflux condenser was charged with 15.0 g of tetramethylcyclotetrasiloxane and 0.15 g of aluminum triisopropoxide and heated in an oil bath of 150°C under ordinary pressure. One hour thereafter, the reaction solution was analyzed by a gas chromatography to find that 4.8% by weight of pentamethylcyclopentasiloxane and 0.8% by weight of hexamethylcyclohexasiloxane were formed.

### Comparative Example

When 50 g of a polymethylhydrogensiloxane which is terminated with trimethylsilyl groups represented by Me₃SiO-(MeSiO)₄₀-SiMe₃ was put into a 300 ml capacity three neck round bottom flask and a methanol solution of sodium methoxide was added thereto as an alkaline catalyst, decomposition of the material occurred by vigorously generating gas and a part of the reaction system was gelled, so that the reaction could not be continued.

According to the present invention, cyclic oligosiloxane can be produced with high yield by a method having industrially high practical value, by which the reaction can be carried out under moderate conditions, namely neutral conditions and relatively low temperature, using easily available materials, without causing gelation of the reaction system.

## Claims

1. A method for producing a cyclic oligosiloxane represented by the formula (Ia) , which comprises heating a polysiloxane represented by the formula (Ib) in the presence of a metal alkoxide under neutral conditions: 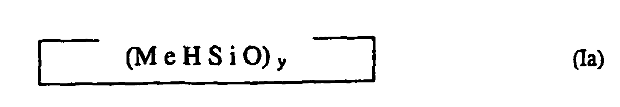
Me₃SiO-(MeHSiO)ₓ-SiMe₃ (Ib)
wherein x is a number of from 20 to 1000, and y is a number of 3 to 10.

2. A method for producing a cyclic oligosiloxane represented by formula (III): 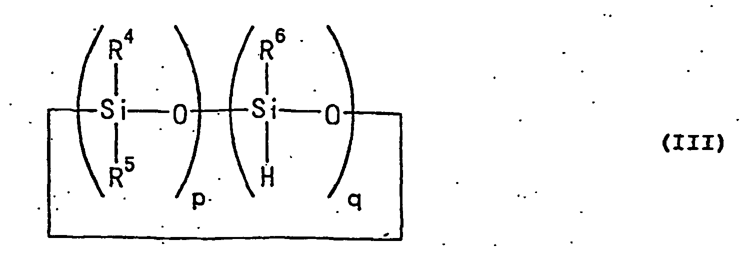 (wherein R⁴ to R⁶ may be the same or different from one another and each represents a monovalent substituted or unsubstituted hydrocarbon radical, p is 0 or a number of from 1 to 9, q is a number from 1 to 10, and p and q are also numbers that satisfy 3 ≤ p + q ≤ 10), which comprises heating a linear polysiloxane represented by formula (I): 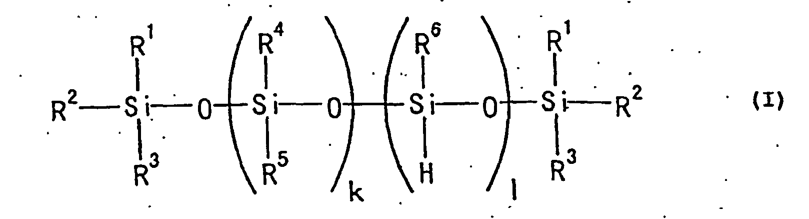 (wherein R¹ represents a monovalent substituted or unsubstituted hydrocarbon radical, R² represents a hydroxyl group or a monovalent substituted or unsubstituted hydrocarbon radical, R³ represents a hydrogen atom or a monovalent substituted or unsubstituted hydrocarbon radical, R⁴ to R⁶ nay be the same or different from one another and each represents a monovalent substituted or unsubstituted hydrocarbon radical, k is 0 or a number of from 1 to 999, L is a number of from 1 to 1000, and k and l are also numbers that satisfy 4 ≤ k + l ≤ 1,000) and/or a cyclic polysiloxane represented by formula (II): 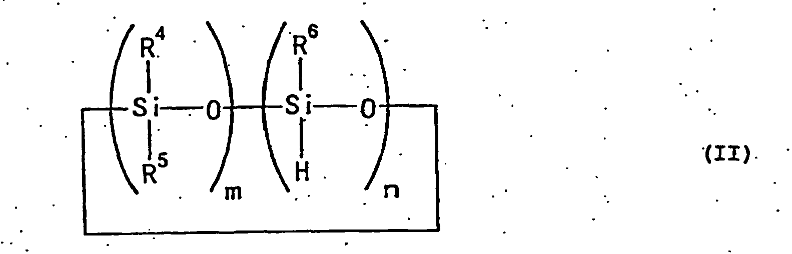 (wherein R⁴ to R⁶ may be the same or different from one another and each represents a monovalent substituted or unsubstituted hydrocarbon radical, m is 0 or a number of from 1 to 999, n is a number of from 1 to 1000, and m and n are also numbers that satisfy 3 ≤ m + n ≤ 1,000) in the presence of a metal alkoxide wherein said metal alkoxide is an aluminum alkoxide, a titanium alkoxide, a zirconium alkoxide, a tin alkoxide or a zinc alkoxide.

3. The method for producing a cyclic oligosiloxane according to claim 2, wherein each of said R¹, R⁴ and R⁶ is a methyl group, R² is a hydroxyl group or a methyl group and R³ is a hydrogen atom or a methyl group.

4. The method for producing a cyclic oligosiloxane according to claim 2 or 3, wherein said k, l, m, n, p and q are k < l, m < n and p < q.

5. The method for producing a cyclic oligosiloxane according to claim 2 or 3, wherein k = m = p = 0.

6. A method for producing a cyclic oligosiloxane represented by formula (VIII): 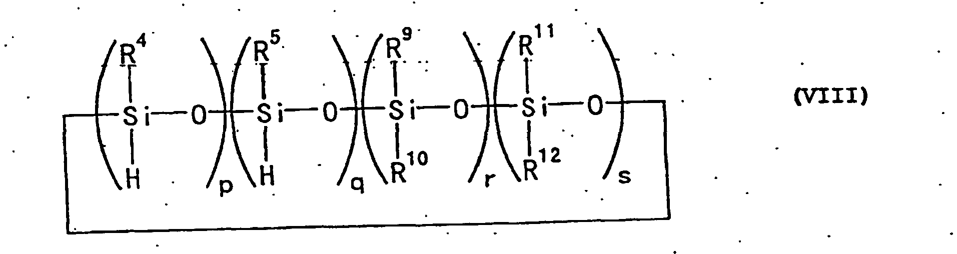 (wherein R⁴, R⁵, R⁹, R¹⁰, R¹¹ and R¹² may be the same or different from one another and each represents a monovalent substituted or unsubstituted hydrocarbon radical, each of p, q, r and s is a number of from 0 to 9, and p, q, r and s are also numbers that satisfy 3 ≤ p + q + r + s ≤ 10, l ≤ p + q and l ≤ r + s), which comprises heating
(1) a polysiloxane component consisting of a linear polysiloxane represented by formula (IV): 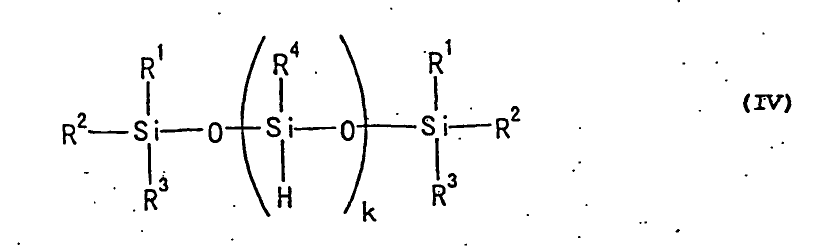 (wherein R¹ represents a monovalent substituted or unsubstituted hydrocarbon radical, R² represents a hydroxyl group or a monovalent substituted or unsubstituted hydrocarbon radical, R³ represents a hydrogen atom or a monovalent substituted or unsubstituted hydrocarbon radical, R⁴ represents a monovalent substituted or unsubstituted hydrocarbon radical, and k is a number of from 4 to 1,000) and/or a cyclic polysiloxane represented by formula (V): 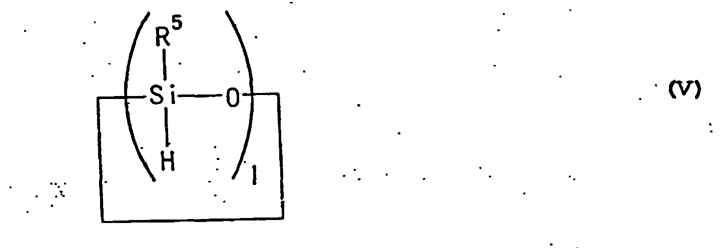 (wherein R⁵ represents the same or a different monovalent substituted or unsubstituted hydrocarbon radical, and l is a number of from 4 to 1,000) and
(2) a polysiloxane component consisting of a linear polysiloxane represented by formula (VI): 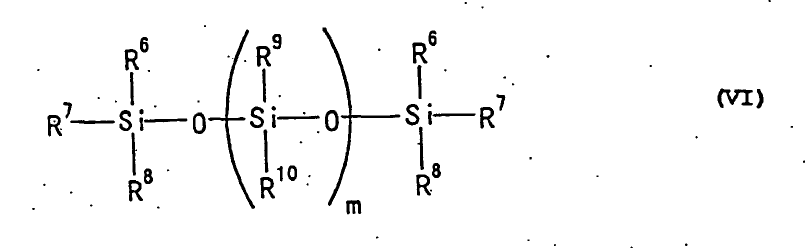 (wherein R⁶ represents a hydroxyl group or a monovalent substituted or unsubstituted hydrocarbon radical, R⁷ to R¹⁰ may be the same or different from one another and each represents a monovalent substituted or unsubstituted hydrocarbon radical, and m is a number of from 4 to 1,000) and/or a cyclic polysiloxane represented by formula (VII) : 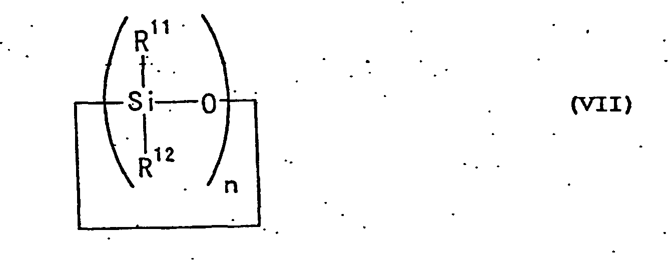 (wherein R¹¹ and R¹² may be the same or different from each other and each represents a monovalent substituted or unsubstituted hydrocarbon radical, and n is a number of from 4 to 1,000), in the presence of a metal alkoxide wherein said metal alkoxide is an aluminum alkoxide, a titanium alkoxide, a zirconium alkoxide, a tin alkoxide or a zinc alkoxide.

7. A method for producing a cyclic oligosiloxane represented by formula (IX): 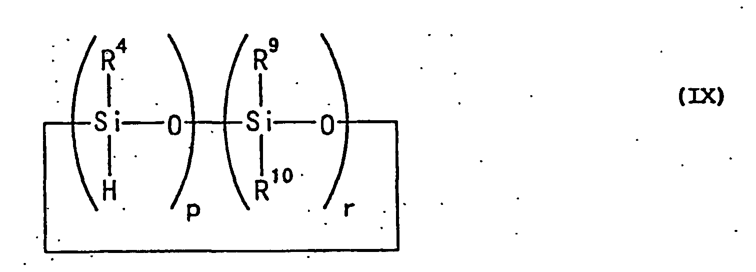 (wherein R⁴, R⁹ and R¹⁰ may be the same or different from one another and each represents a monovalent substituted or unsubstituted hydrocarbon radical, each of p and r is a number of from 1 to 9, and p and r are also numbers that satisfy 3 ≤ p + r ≤ 10), which comprises heating a linear polysiloxane represented by formula (IV): 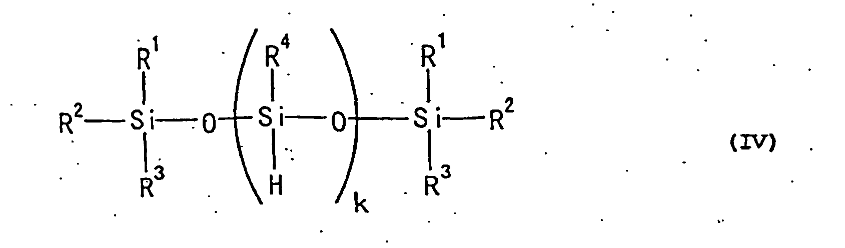 (wherein R¹ represents a monovalent substituted or unsubstituted hydrocarbon radical , R² represents a hydroxyl group or a monovalent substituted or unsubstituted hydrocarbon radical, R³ represents a hydrogen atom or a monovalent substituted or unsubstituted hydrocarbon radical, R⁴ represents a monovalent substituted or unsubstituted hydrocarbon radical, and k is a number of from 4 to 1,000) and a linear polysiloxane represented by formula (VI): 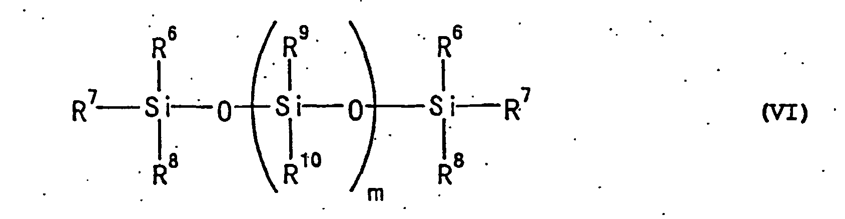 (wherein R⁶ represents a hydroxyl group or a monovalent substituted or unsubstituted hydrocarbon radical, R⁷ to R¹⁰ may be the same or different from one another and each represents a monovalent substituted or unsubstituted hydrocarbon radical, and m is a number of from 4 to 1,000), in the presence of a metal alkoxide wherein said metal alkoxide is an aluminum alkoxide, a titanium alkoxide, a zirconium alkoxide, a tin alkoxide or a zinc alkoxide.

8. The method for producing a cyclic oligosiloxane according to claim 6 or 7, wherein each of R¹, R⁴, R⁵, R⁷, R⁸, R⁹, R¹⁰, R¹¹ and R¹² is a methyl group, each of R² and R⁶ is a hydroxyl group or a methyl group and R³ is a hydrogen atom or a methyl group.

9. The method for producing a cyclic oligosiloxane according to any one of claims 1 to 7, wherein said metal alkoxide is an aluminum alkoxide.

10. The method for producing a cyclic oligosiloxane according to any one of claims 1 to 9, wherein the formed cyclic oligosiloxane is distilled under a reduced pressure.

## Patentansprüche

1. Verfahren zur Herstellung eines cyclischen Oligosiloxans der Formel (Ia), umfassend Erwärmen eines Polysiloxans der Formel (Ib) in der Gegenwart eines Metallalkoxids unter neutralen Bedingungen: 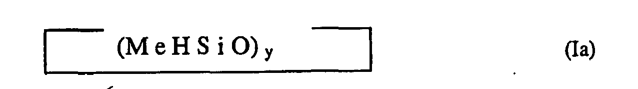
Me₃SiO-(MeHSiO)ₓ-SiMe₃ (Ib)
wobei x eine Zahl von 20 bis 1000 ist, und y eine Zahl von 3 bis 10 ist.

2. Verfahren zur Herstellung eines cyclischen Oligosiloxans der Formel (III): 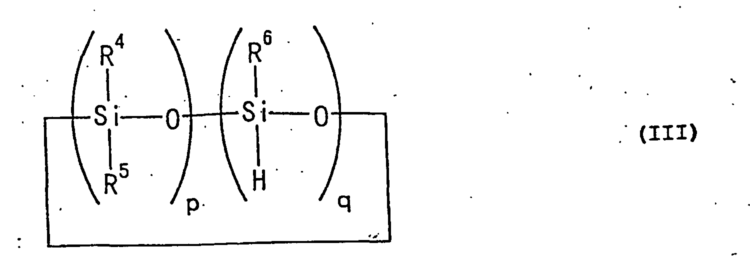 (wobei R⁴ bis R⁶ gleich oder voneinander verschieden sein können und jeweils einen einwertigen substituierten oder unsubstituierten Kohlenwasserstoffrest bedeuten, p 0 oder eine Zahl von 1 bis 9 ist, q eine Zahl von 1 bis 10 ist, und p und q auch Zahlen sind, die
3 ≤ p + q ≤ 10 erfüllen), umfassend Erwärmen eines geradkettigen Polysiloxans der Formel (I): 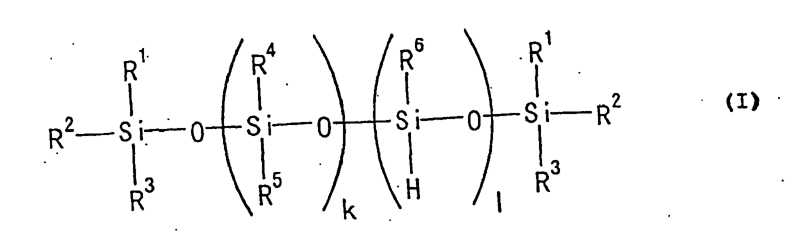 (wobei R¹ einen einwertigen substituierten oder unsubstituierten Kohlenwasserstoffrest bedeutet, R² eine Hydroxylgruppe oder einen einwertigen substituierten oder unsubstituierten Kohlenwasserstoffrest bedeutet, R³ ein Wasserstoffatom oder einen einwertigen substituierten oder unsubstituierten Kohlenwasserstoffrest bedeutet, R⁴ bis R⁶ gleich oder voneinander verschieden sein können und jeweils einen einwertigen substituierten oder unsubstituierten Kohlenwasserstoffrest bedeuten, k 0 oder eine Zahl von 1 bis 999 ist, l eine Zahl von 1 bis 1000 ist, und k und 1 auch Zahlen sind, die 4 ≤ k + l ≤ 1000 erfüllen) und/oder eines cyclischen Polysiloxans der Formel (II): 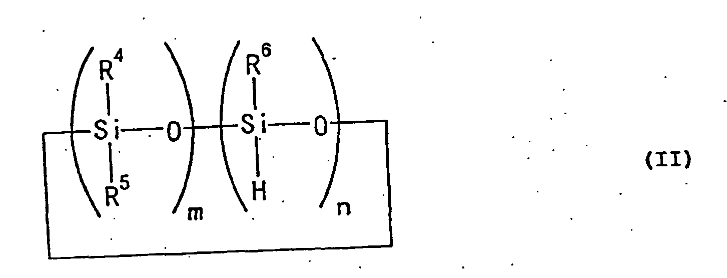 (wobei R⁴ bis R⁶ gleich oder voneinander verschieden sein können und jeweils einen einwertigen substituierten oder unsubstituierten Kohlenwasserstoffrest bedeuten, m 0 oder eine Zahl von 1 bis 999 ist, n eine Zahl von 1 bis 1000 ist, und m und n auch Zahlen sind, die 3 ≤ m + n ≤ 1000 erfüllen) in der Gegenwart eines Metallalkoxids, wobei das Metallalkoxid ein Aluminiumalkoxid, ein Titanalkoxid, ein Zirkonalkoxid, ein Zinnalkoxid oder ein Zinkalkoxid ist.

3. Verfahren zur Herstellung eines cyclischen Oligosiloxans nach Anspruch 2, wobei jedes von R¹, R⁴ und R⁶ eine Methylgruppe ist, R² eine Hydroxylgruppe oder eine Methylgruppe ist und R³ ein Wasserstoffatom oder eine Methylgruppe ist.

4. Verfahren zur Herstellung eines cyclischen Oligosiloxans nach Anspruch 2 oder 3, wobei für k, l, m, n, p und q gilt: k < l, m < n und p < q.

5. Verfahren zur Herstellung eines cyclischen Oligosiloxans nach Anspruch 2 oder 3, wobei k=m=p=0.

6. Verfahren zur Herstellung eines cyclischen Oligosiloxans der Formel (VIII): 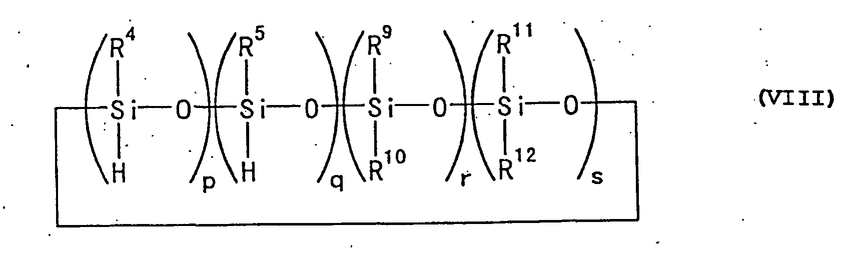 (wobei R⁴, R⁵, R⁹, R¹⁰, R¹¹ und R¹² gleich oder voneinander verschieden sein können und jeweils einen einwertigen substituierten oder unsubstituierten Kohlenwasserstoffrest bedeuten, jedes von p, q, r und s eine Zahl von 0 bis 9 ist, und p, q, r und s auch Zahlen sind, die 3≤p + q + r + s ≤ 10, l ≤ p + q und 1≤ r + s erfüllen), umfassend Erwärmen
(1) einer Polysiloxankoniponente, bestehend aus einem geradkettigen Polysiloxan der Formel (IV): 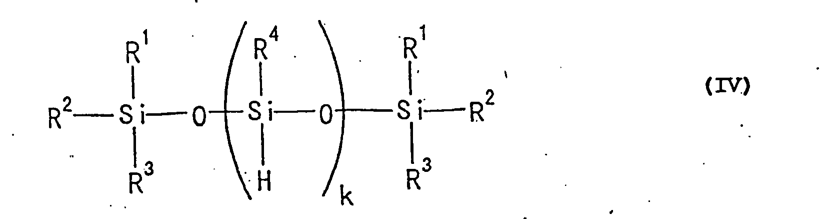 (wobei R¹ einen einwertigen substituierten oder unsubstituierten Kohlenwasserstoffrest bedeutet, R² eine Hydroxylgruppe oder einen einwertigen substituierten oder unsubstituierten Kohlenwasserstoffrest bedeutet, R³ ein Wasserstoffatom oder einen einwertigen substituierten oder unsubstituierten Kohlenwasserstoffrest bedeutet, R⁴ einen einwertigen substituierten oder unsubstituierten Kohlenwasserstoffrest bedeutet, und k eine Zahl von 4 bis 1000 ist) und/oder eines cyclischen Polysiloxans der Formel (V): 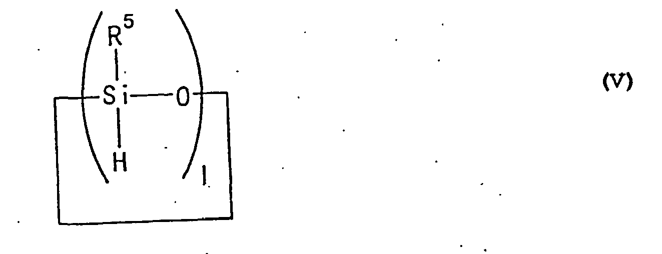 (wobei R⁵ den gleichen oder einen verschiedenen einwertigen substituierten oder unsubstituierten Kohlenwasserstoffrest bedeutet, und 1 eine Zahl von 4 bis 1000 ist) und
(2) einer Polysiloxankomponente, bestehend aus einem geradkettigen Polysiloxan der Formel (VI): 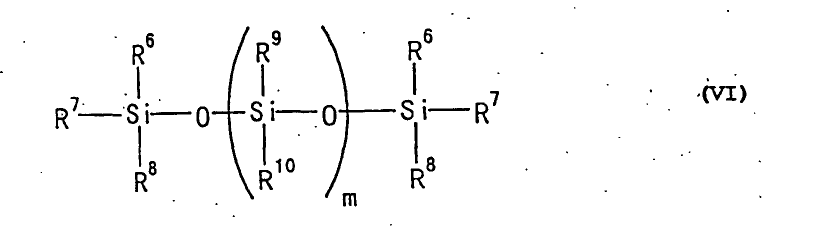 (wobei R⁶ eine Hydroxylgruppe oder einen einwertigen substituierten oder unsubstituierten Kohlenwasserstoffrest bedeutet, R⁷ bis R¹⁰ gleich oder voneinander verschieden sein können und jeweils einen einwertigen substituierten oder unsubstituierten Kohlenwasserstoffrest bedeuten, und m eine Zahl von 4 bis 1000 ist) und/oder eines cyclischen Polysiloxans der Formel (VII): 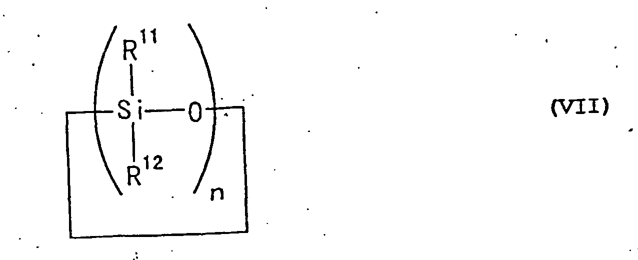 (wobei R¹¹ und R¹² gleich oder voneinander verschieden sein können und jeweils einen einwertigen substituierten oder unsubstituierten Kohlenwasserstoffrest bedeuten, und n eine Zahl von 4 bis 1000 ist) in der Gegenwart eines Metallalkoxids, wobei das Metallalkoxid ein Aluminiumalkoxid, ein Titanalkoxid, ein Zirkonalkoxid, ein Zinnalkoxid oder ein Zinkalkoxid ist.

7. Verfahren zur Herstellung eines cyclischen Oligosiloxans der Formel (IX): 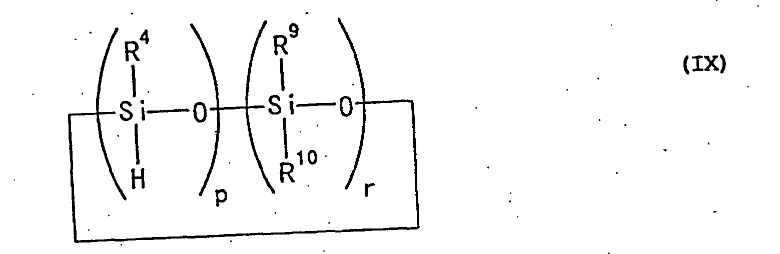 (wobei R⁴, R⁹ und R¹⁰ gleich oder voneinander verschieden sein können und jeweils einen einwertigen substituierten oder unsubstituierten Kohlenwasserstoffrest bedeuten, jedes von p und r eine Zahl von 1 bis 9 ist, und p und r auch Zahlen sind, die 3 ≤ p + r ≤ 10 erfüllen), umfassend Erwärmen eines geradkettigen Polysiloxans der Formel (IV): 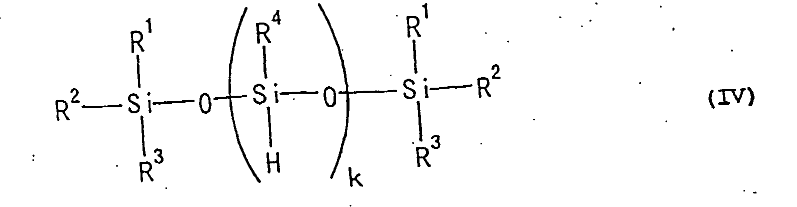 (wobei R¹ einen einwertigen substituierten oder unsubstituierten Kohlenwasserstoffrest bedeutet, R² eine Hydroxylgruppe oder einen einwertigen substituierten oder unsubstituierten Kohlenwasserstoffrest bedeutet, R³ ein Wasserstoffatom oder einen einwertigen substituierten oder unsubstituierten Kohlenwasserstoffrest bedeutet, R⁴ einen einwertigen substituierten oder unsubstituierten Kohlenwasserstoffrest bedeutet, und k eine Zahl von 4 bis 1000 ist) und eines geradkettigen Polysiloxans der Formel (VI): 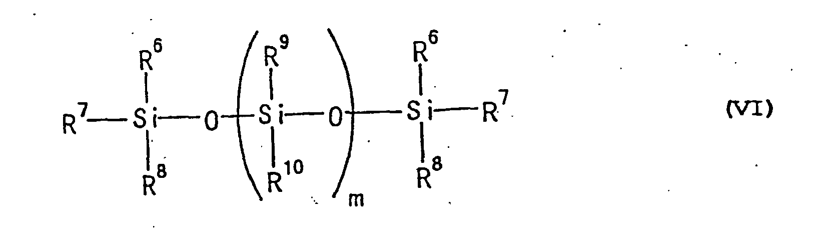 (wobei R⁶ eine Hydroxylgruppe oder einen einwertigen substituierten oder unsubstituierten Kohlenwasserstoffrest bedeutet, R⁷ bis R¹⁰ gleich oder voneinander verschieden sein können und jeweils einen einwertigen substituierten oder unsubstituierten Kohlenwasserstoffrest bedeuten, und m eine Zahl von 4 bis 1000 ist) in der Gegenwart eines Metallalkoxids, wobei das Metallalkoxid ein Aluminiumalkoxid, ein Titanalkoxid, ein Zirkonalkoxid, ein Zinnalkoxid oder ein Zinkalkoxid ist.

8. Verfahren zur Herstellung eines cyclischen Oligosiloxans nach Anspruch 6 oder 7, wobei jedes von R¹, R⁴, R⁵, R⁷, R⁸, R⁹, R¹⁰, R¹¹ und R¹² eine Methylgruppe ist, jedes von. R² und R⁶ eine Hydroxylgruppe oder eine Methylgruppe ist und R³ ein Wasserstoffatom oder eine Methylgruppe ist.

9. Verfahren zur Herstellung eines cyclischen Oligosiloxans nach einem der Ansprüche 1 bis 7, wobei das Metallalkoxid ein Aluminiumalkoxid ist.

10. Verfahren zur Herstellung eines cyclischen Oligosiloxans nach einem der Ansprüche 1 bis 9, wobei das gebildete cyclische Oligosiloxan unter einem reduzierten Druck destilliert wird.

## Revendications

1. Procédé servant à produire un oligosiloxane cyclique représenté par la formule (Ia), lequel comprend de chauffer un polysiloxane représenté par la formule (Ib) en présence d'un alcoxyde de métal dans des conditions neutres : 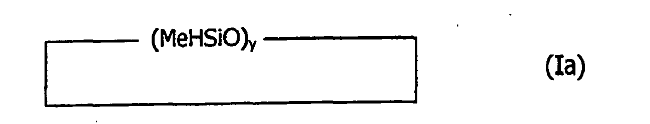
Me₃SiO-(MeHSiO)ₓ SiMe₃ (Ib)
dans lesquelles x est un nombre allant de 20 à 1000 et y est un nombre de 3 à 10.

2. Procédé servant à produire un oligosiloxane cyclique représenté par la formule (III) : 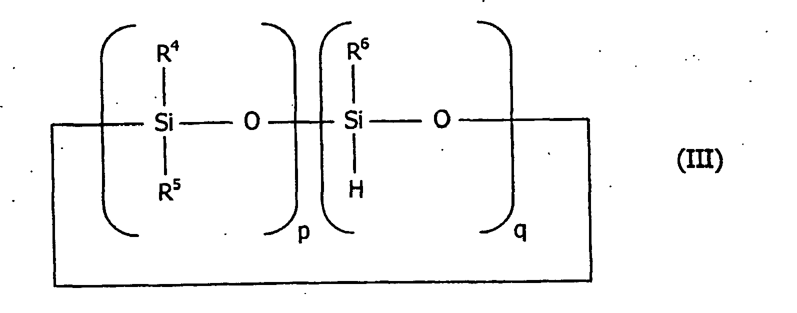 (dans laquelle R⁴ à R⁶ peuvent être identiques ou différents les uns des autres et chacun représente un radical monovalent d'hydrocarbure substitué ou non substitué, p est 0 ou un nombre allant de 1 à 9, q est un nombre allant de 1 à 10 et p et q sont également des nombres qui satisfont à la relation 3 ≤ p + q ≤ 10), lequel comprend de chauffer un polysiloxane linéaire représenté par la formule (I) : 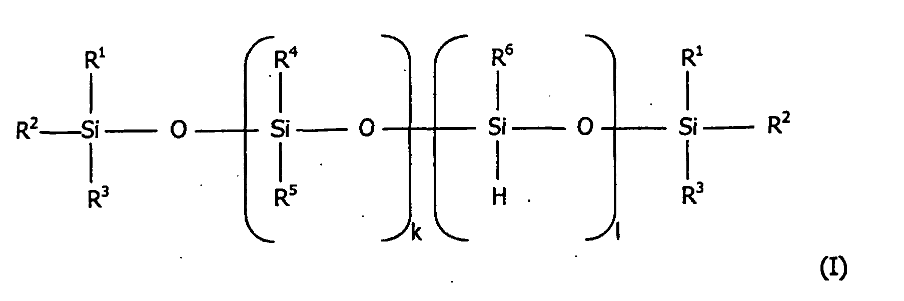 (dans laquelle R¹ représente un radical monovalent d'hydrocarbure substitué ou non substitué, R² représente un groupe hydroxyle ou un radical monovalent d'hydrocarbure substitué ou non substitué, R³ représente un atome d'hydrogène ou un radical monovalent d'hydrocarbure substitué ou non substitué, R⁴ à R⁶ peuvent être identiques ou différents les uns des autres et chacun représente un radical monovalent d'hydrocarbure substitué ou non substitué, k est 0 ou un nombre allant de 1 à 999, l est un nombre allant de 1 à 1000 et k et l sont également des nombres qui satisfont à la relation 4 ≤ k + l ≤ 1000) et/ou un polysiloxane cyclique représenté par la formule (II) : 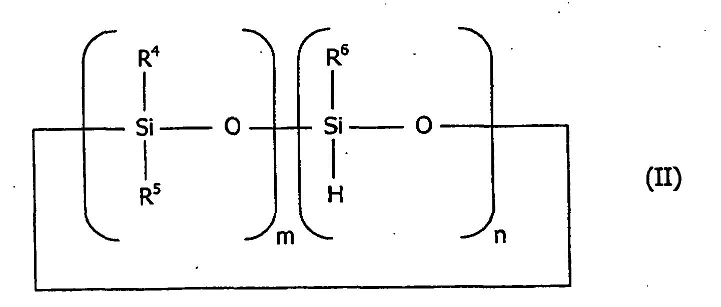 (dans laquelle R⁴ à R⁶ peuvent être identiques ou différents les uns des autres et chacun représente un radical monovalent d'hydrocarbure substitué ou non substitué, m est 0 ou un nombre allant de 1 à 999, n est un nombre allant de 1 à 1000 et m et n sont également des nombres qui satisfont à la relation 3 ≤ m + n ≤ 1000), en présence d'un alcoxyde de métal, dans lequel ledit alcoxyde de métal est un alcoxyde d'aluminium, un alcoxyde de titane, un alcoxyde de zirconium, un alcoxyde d'étain ou un alcoxyde de zinc.

3. Procédé servant. à produire un oligosiloxane cyclique selon la revendication 2, dans lequel chacun desdits R¹, R⁴ et R⁶ est un groupe méthyle, R² est un groupe hydroxyle ou un groupe méthyle et R³ est un atome d'hydrogène ou un groupe méthyle.

4. Procédé servant à produire un oligosiloxane cyclique selon la revendication 2 ou 3, dans lequel k, l, m, n, p et q sont tels que k < l, m < n et p < q.

5. Procédé servant à produire un oligosiloxane cyclique selon la revendication 2 ou 3, dans lequel k = m = p = 0.

6. Procédé servant à produire un oligosiloxane cyclique représenté par la formule (VIII) : 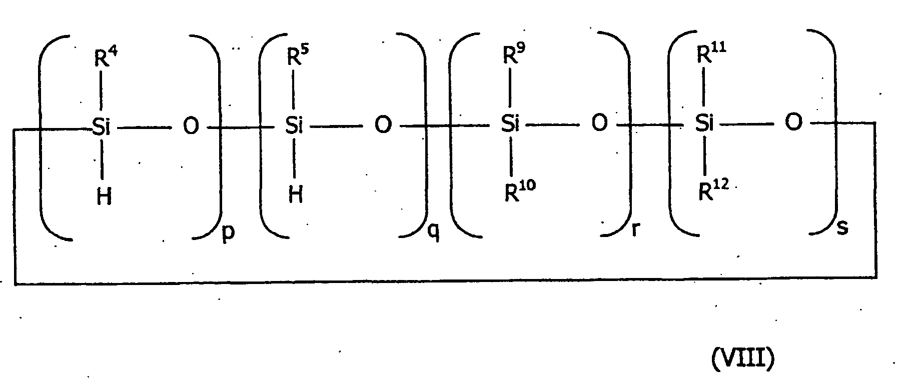 (dans laquelle R⁴, R⁵, R⁹, R¹⁰, R¹¹ et R¹² peuvent être identiques ou différents les uns des autres et chacun représente un radical monovalent d'hydrocarbure substitué ou non substitué, chacun de p, q, r et s est un nombre allant de 0 à 9 et p, q, r et s sont également des nombres qui satisfont aux relations 3≤p+q+r+s≤10, 1≤p+q et 1≤r+s), lequel comprend de chauffer
(1) un composant polysiloxane constitué d'un polysiloxane linéaire représenté par la fonnule (IV) : 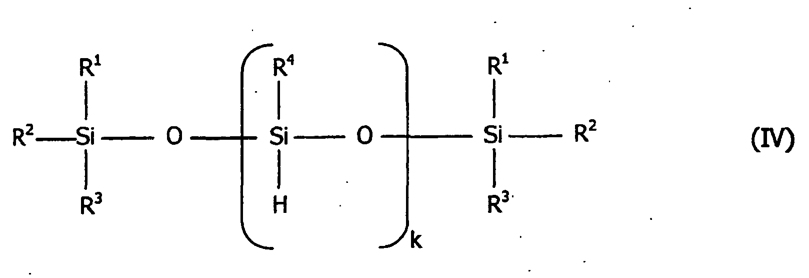 (dans laquelle R¹ représente un radical monovalent d'hydrocarbure substitué ou non substitué, R² représente un groupe hydroxyle ou un radical monovalent d'hydrocarbure substitué ou non substitué, R³ représente un atome d'hydrogène ou un radical monovalent d'hydrocarbure substitué ou non substitué, R⁴ représente un radical monovalent d'hydrocarbure substitué ou non substitué et k est un nombre allant de 4 à 1000) et/ou un polysiloxane cyclique représenté par la formule (V) : 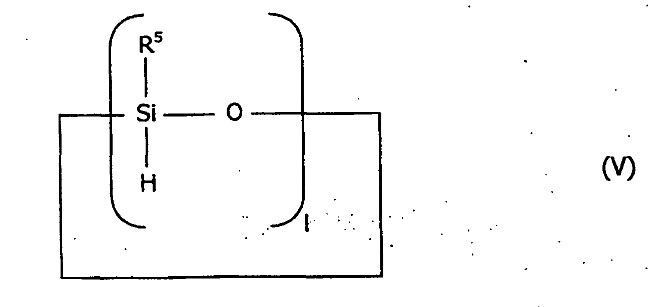 (dans laquelle R⁵ représente un radical monovalent d'hydrocarbure substitué ou non substitué identique ou différent et l est un nombre allant de 4 à 1000) et
(2) un composant polysiloxane constitué d'un polysiloxane linéaire représenté par la formule (VI) : 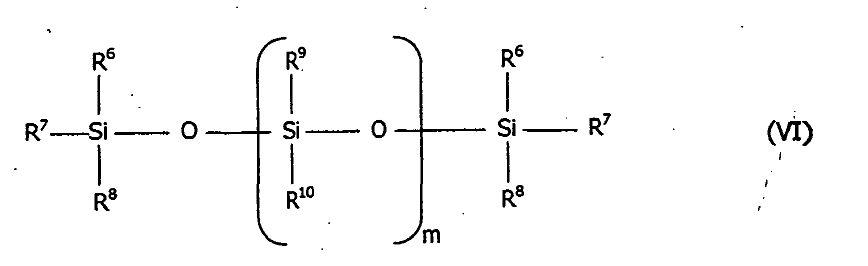 (dans laquelle R⁶ représente un groupe hydroxyle ou un radical monovalent d'hydrocarbure substitué ou non substitué, R⁷ à R¹⁰ peuvent être identiques ou différents les uns des autres et chacun représente un radical monovalent d'hydrocarbure substitué ou non substitué et m est un nombre allant de 4 à 1000) et/ou un polysiloxane cyclique représenté par la formule (VII) : 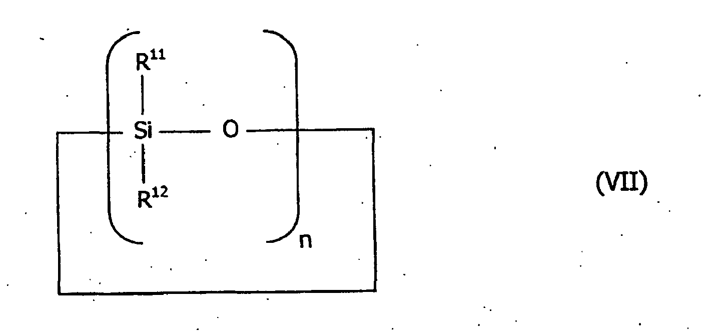 (dans laquelle R¹¹ et R¹² peuvent être identiques ou différents l'un de l'autre et chacun représente un radical monovalent d'hydrocarbure substitué ou non substitué et n est un nombre allant de 4 à 1000), en présence d'un alcoxyde de métal, dans lequel ledit alcoxyde de métal est un alcoxyde d'aluminium, un alcoxyde de titane, un alcoxyde de zirconium, un alcoxyde d'étain ou un alcoxyde de zinc.

7. Procédé servant à produire un oligosiloxane cyclique représenté par la formule (IX) : 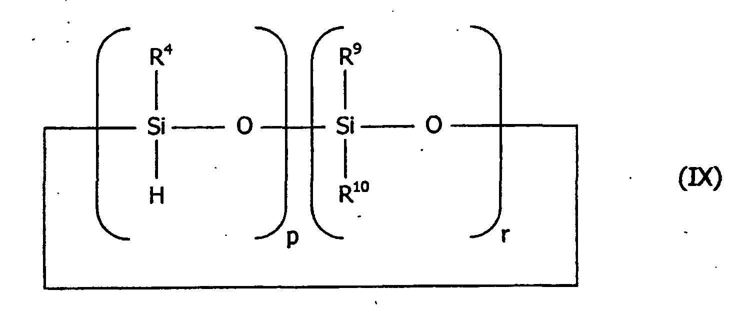 (dans laquelle R⁴, R⁹ et R¹⁰ peuvent être identiques ou différents les uns des autres et chacun représente un radical monovalent d'hydrocarbure substitué ou non substitué, chacun de p et r est un nombre allant de 1 à 9 et p et r sont également des nombres qui satisfont à la relation 3 ≤ p + r ≤ 10), lequel comprend de chauffer un polysiloxane linéaire représenté par la formule (IV) : 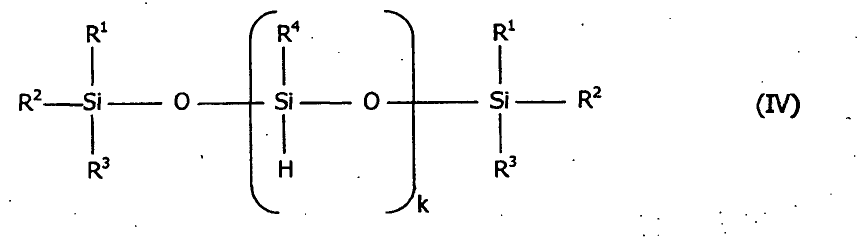 (dans laquelle R¹ représente un radical monovalent d'hydrocarbure substitué ou non substitué, R² représente un groupe hydroxyle ou un radical monovalent d'hydrocarbure substitué ou non substitué, R³ représente un atome d'hydrogène ou un radical monovalent d'hydrocarbure substitué ou non substitué, R⁴ représente un radical monovalent d'hydrocarbure substitué ou non substitué et k est un nombre allant de 4 à 1000) et un polysiloxane linéaire représenté par la formule (VI) : 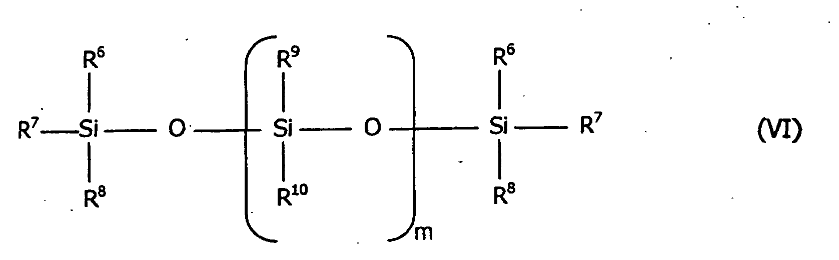 (dans laquelle R⁶ représente un groupe hydroxyle ou un radical monovalent d'hydrocarbure substitué ou non substitué, R⁷ à R¹⁰ peuvent être identiques ou différents les uns des autres et chacun représente un radical monovalent d'hydrocarbure substitué ou non substitué et m est un nombre allant de 4 à 1000), en présence d'un alcoxyde de métal, dans lequel ledit alcoxyde de métal est un alcoxyde d'aluminium, un alcoxyde de titane, un alcoxyde de zirconium, un alcoxyde d'étain ou un alcoxyde de zinc.

8. Procédé servant à produire un oligosiloxane cyclique selon la revendication 6 ou 7, dans lequel chacun de R¹, R⁴, R⁵, R⁷, R⁸, R⁹, R¹⁰, R¹¹ et R¹² est un groupe méthyle, chacun de R² et R⁶ est un groupe hydroxyle ou un groupe méthyle et R³ est un atome d'hydrogène ou un groupe méthyle.

9. Procédé servant à produire un oligosiloxane cyclique selon l'une quelconque des revendications 1 à 7, dans lequel ledit alcoxyde de métal est un alcoxyde d'aluminium.

10. Procédé servant à produire un oligosiloxane cyclique selon l'une quelconque des revendications 1 à 9, dans lequel l'oligosiloxane cyclique formé est distillé sous une pression réduite.
